# FASCICULE DE BREVET EUROPEEN

(11) **EP 1 477 378 B1**
(45) Date de publication et mention de la délivrance du brevet: **07.09.2005**
(21) Numéro de dépôt: 04291160.2
(22) Date de dépôt: 05.05.2004
(51) Int. Cl.: B60R 25/02

(54) **Verrou électrique d'un arbre de direction de véhicule automobile**
Elektrisches Schloss einer Lenkspindel eines Kraftfahrzeuges
Electric lock of a motor vehicle steering shaft

(30) Priorité: 15.05.2003 FR 0305852
(43) Date de publication de la demande: 17.11.2004
(73) Titulaire: NACAM France S.A., F-41100 Vendôme (FR)
(72) Inventeur: Grasswill, Dimitri, 72310 Besse sur Braye (FR); Laisement, André, 41290 La Chapelle Encherie (FR); Barcat, Florian, 37000 Tours (FR)
(74) Mandataire: Cabinet Martinet & Lapoux

(56) Documents cités:
- EP-A- 1 157 907
- US-B1- 6 295 848

## Description

La présente invention se rapporte à un verrou à commande électrique d'une colonne de direction de véhicule automobile. Ledit verrou comporte un moteur électrique, un ensemble de transmission de mouvement et un pêne. Ledit pêne a deux positions : une position rentrée et une position sortie par rapport à un élément solidaire de l'arbre de direction de colonne ; les deux positions correspondant aux positions verrouillée et déverrouillée de ladite colonne.

Il existe des verrous à commande électrique qui comportent un moteur électrique, un ensemble de transmission de mouvement et un pêne. Ces types de verrous ont leurs différents éléments qui sont disposés selon plusieurs axes qui sont situés dans des plans différents. Ce genre d'architecture entraîne un encombrement relativement important du verrou qui est spécifique à une direction donnée.

L'amélioration croissante de la sécurité sur les colonnes de direction exige une garantie du maintien de la position verrouillée et déverrouillée. Cette exigence nécessite des agencements supplémentaires, qui augmentent d'autant l'encombrement et le prix du verrou.

Un verrou selon le préambule de la revendication 1 est décrit dans le document EP 1157907 A2.

Le but de la présente invention est de proposer un verrou à commande électrique qui offre une architecture des différents éléments la plus compacte possible, afin d'avoir un ensemble sous forme d'un module facilement adaptable à n'importe quel type de colonne de direction tout en tenant compte de l'intégration dans le véhicule concerné. De plus, le verrou doit garantir une fonction de maintien dans les positions verrouillée et déverrouillée, en intégrant ladite fonction dans les éléments dudit verrou.

Selon l'invention, le verrou à commande électrique de colonne de direction de véhicule automobile comporte un moteur électrique, un ensemble de transmission de mouvement qui agit sur un pêne. Ledit pêne coopère avec un élément solidaire de l'arbre de direction de ladite colonne de direction pour avoir deux positions : une position avec le pêne introduit dans ledit élément et une position avec le pêne dégagé de l'élément de l'arbre de direction, pour obtenir les positions verrouillée et déverrouillée de la colonne.

Selon l'invention, le verrou à commande électrique comporte le moteur électrique, une vis et un écrou.

Le moteur électrique, dont la position est fixe, a un arbre de sortie qui entraîne en rotation la vis coopérant avec l'écrou fixe en rotation. Le moteur électrique, la vis et l'écrou ont un même axe xx. Le pêne se déplace suivant un axe yy ; les axes xx et yy forment un plan XY et sont perpendiculaires.

L'écrou comporte une face inclinée orientée suivant l'axe xx afin de constituer une cale inclinée qui se déplace suivant l'axe xx. Ladite face inclinée a au moins une pente, qui est déterminée par rapport au plan de l'axe xx sensiblement perpendiculaire au plan XY.

Le pêne comporte un corps avec une face inclinée ayant au moins une pente, qui est déterminée par rapport au plan de l'axe xx, de manière que ladite face inclinée coopère avec la face inclinée de la cale inclinée, pour que le déplacement de la cale inclinée suivant l'axe xx entraîne le déplacement du pêne suivant l'axe yy, afin d'avoir la position du pêne sorti et la position du pêne rentré.

Le moteur électrique, la vis, la cale inclinée, le corps du pêne sont agencés pour être alignés suivant l'axe xx, de manière à avoir l'encombrement transversal le plus faible possible par rapport audit axe xx, afin d'être logés dans un corps de verrou.

Selon un mode de réalisation de l'invention, les faces inclinées de la cale inclinée et du pêne comprennent au moins deux zones : une zone à forte pente et une zone à faible pente, afin que les zones à forte pente coopèrent pour assurer la course d'approche ou du recul du pêne ; et que les zones à faible pente coopèrent pour permettre la course d'engagement ou de désengagement du pêne dans l'élément solidaire de l'arbre de direction.

La forte pente est déterminée pour avoir la course d'approche de la cale inclinée donc son encombrement axial le plus faible possible. La faible pente est déterminée pour avoir la transmission d'effort la plus faible possible du pêne sur la cale inclinée suivant l'axe xx, afin que lors du déverrouillage, le couple demandé au moteur soit le plus faible possible.

Selon l'invention et afin d'avoir la sécurité demandée, la cale inclinée comporte une contre-pente agencée sur la face inclinée. Ladite contre-pente coopère avec une contre-pente agencée sur la face inclinée du pêne pour assurer le maintien en position déverrouillée.

La cale inclinée peut aussi comporter une cavité en forme de calotte sphérique qui coopère avec une bille poussée par un ressort logé dans le corps de verrou, pour assurer le maintien en position déverrouillée.

De plus, le système vis-écrou et le système de la cale inclinée et du pêne sont agencés de manière à ce que lesdits systèmes soient irréversibles afin de garantir la sécurité mécanique exigée.

Dans un premier type d'architecture de l'invention, le corps du pêne comporte une ouverture dont un côté est la face inclinée, et avec deux faces latérales sur lesquelles coulissent deux faces latérales de la cale inclinée. Les faces latérales sont sensiblement parallèles au plan XY. Il y a au moins deux faces externes qui coulissent dans deux faces correspondantes du logement du pêne agencées dans le corps du verrou, les faces étant sensiblement parallèles au plan XY.

De plus, la cale inclinée est munie de deux faces latérales qui coulissent, suivant l'axe xx, entre deux glissières agencées dans le corps de verrou, les deux faces latérales et les deux glissières étant sensiblement parallèles au plan XY.

Enfin, au moins un ressort de verrouillage et d'engagement prend appui à l'intérieur du corps et s'applique sur l'un des côtés du corps du pêne.

Dans un deuxième type d'architecture de l'invention, le corps du pêne comporte deux portions latérales agencées de part et d'autre de la vis, et une portion centrale de raccordement. La cale inclinée comporte deux portions latérales agencées à l'extérieur de la portion latérale correspondante du pêne par rapport à l'axe xx, et une portion centrale de raccordement constituant l'écrou qui est disposée à l'extérieur du pêne par rapport au moteur électrique.

Ainsi, chaque portion latérale du pêne comporte une portion de la face inclinée qui coopère avec une portion de la face inclinée de la cale inclinée, qui est agencée sur la portion latérale correspondante de ladite cale inclinée.

Enfin, au moins un ressort de verrouillage et d'engagement prend appui à l'intérieur du corps de verrou, le ressort s'appliquant sur la portion latérale correspondante du corps du pêne.

Dans cette deuxième architecture, la portion centrale du pêne comporte au moins deux faces externes qui coulissent dans deux faces correspondantes du logement du pêne agencée dans le corps, les faces étant sensiblement parallèles au plan XY. Chaque portion latérale de la cale inclinée coulisse d'une part contre la face externe de la portion latérale correspondante du pêne et d'autre part contre une paroi du corps de verrou.

Dans toutes les versions de l'invention, il peut y avoir au moins un capteur qui est monté à l'intérieur du corps pour donner la position du verrou correspondant aux positions verrouillée et déverrouillée ; et une unité de commande sous la forme d'une carte électronique de contrôle est montée dans le corps de verrou suivant le sens de l'axe xx.

Selon l'invention, le verrou est disposé sur un élément support du corps de colonne ; et le corps de verrou pénètre et est fixé dans l'élément support par une vis de fixation. Dans cette configuration, l'axe xx et la vis de fixation peuvent être sensiblement parallèles à l'arbre de direction.

L'axe xx et la vis de fixation peuvent être aussi sensiblement dans des plans perpendiculaires à l'arbre de direction.

Enfin, l'axe xx et la vis de fixation peuvent être sensiblement parallèles et dans des plans inclinés par rapport à l'arbre de direction.

Dans une autre configuration de l'invention, le corps du verrou est intégré au corps de colonne, et l'axe xx est sensiblement parallèle, transversal, ou de biais, par rapport à l'arbre de direction.

Ainsi le verrou à commande électrique selon l'invention offre un agencement des différents éléments qui sont disposés suivant le même axe, de manière à avoir un encombrement transversal le plus réduit possible. Le système du verrou peut ainsi être logé dans un corps de verrou ayant la forme d'un module, qui peut s'adapter facilement à n'importe quelle colonne de direction et être agencé aisément dans le véhicule concerné.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective d'une partie haute de colonne de direction avec un verrou électrique selon l'invention disposé parallèlement à l'arbre de direction ;
- la figure 2 est une vue partielle analogue à la figure 1 avec un verrou électrique transversal ;
- la figure 3 est une vue partielle analogue à la figure 1 avec un verrou électrique en biais ;
- la figure 4 est une vue partielle analogue à la figure 1, avec un verrou électrique intégré ;
- la figure 5 est une vue en perspective du verrou électrique représenté sur les figures 1, 2 et 3, le couvercle du corps de verrou étant enlevé ;
- la figure 6 est une coupe suivant le plan VI-VI de la figure 5, la colonne étant en position verrouillée ;
- la figure 7 est une coupe suivant le plan VII-VII de la figure 6 ;
- la figure 8 est une coupe suivant le plan VIII-VIII de la figure 6 ;
- la figure 9 est une coupe suivant le plan IX-IX de la figure 6 ;
- la figure 10 est une coupe partielle agrandie de la figure 6 ;
- la figure 11 est une vue analogue à la figure 10, la colonne étant en position déverrouillée ;
- la figure 12 est une vue analogue à la figure 11 d'un autre mode de réalisation ;
- la figure 13 est une vue suivant XIII de la figure 5 ;
- la figure 14 est une vue en perspective d'un autre mode de réalisation du verrou électrique qui est représenté sur la figure 4, le couvercle du corps de verrou étant enlevé ; et
- la figure 15 est une vue suivant XV de la figure 14, le corps du verrou étant représenté en partie.

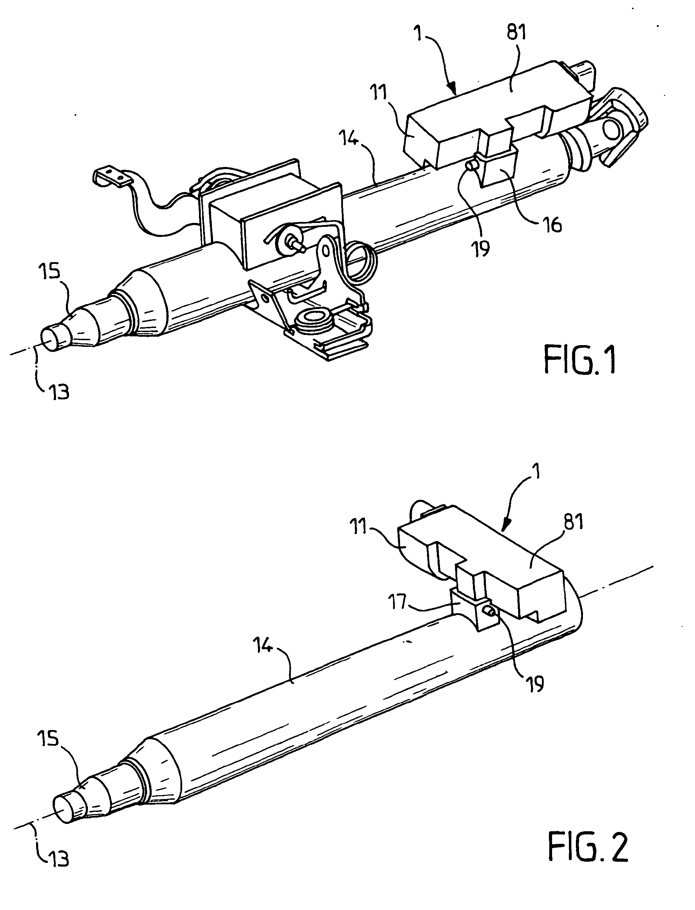

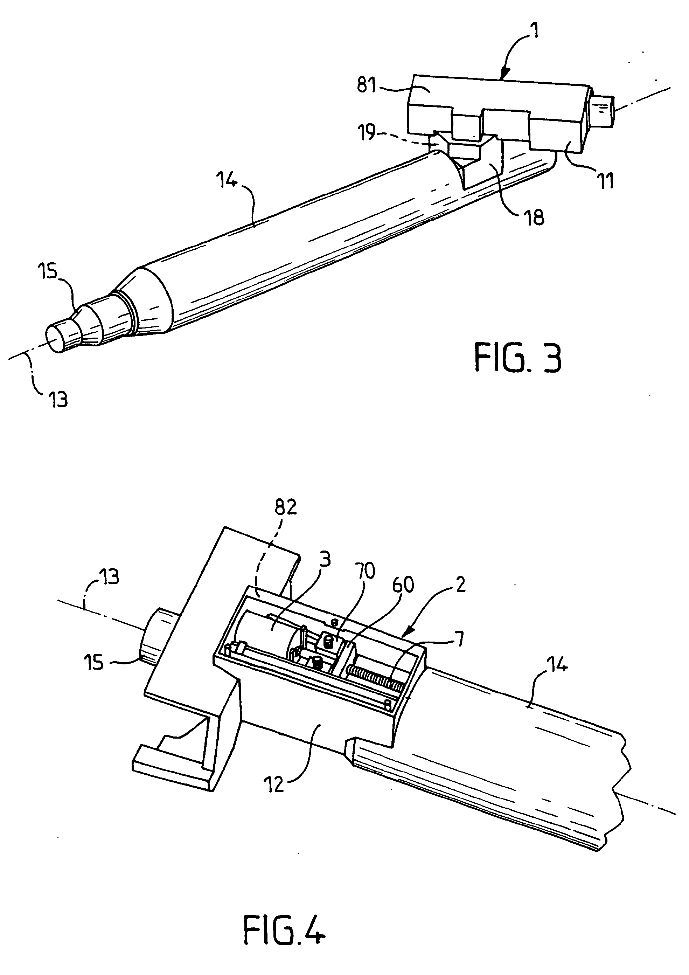

Les figures 1, 2 et 3 représentent une colonne de direction de véhicule automobile, qui est équipée d'un verrou 1 à commande électrique selon l'invention. La colonne de direction comprend un arbre de direction 15, qui est monté dans un corps de colonne 14 et qui est tournant autour d'un axe de direction 13. Le verrou 1 à commande électrique sera appelé dans la suite de la description verrou électrique 1. Selon une caractéristique essentielle de l'invention, le verrou électrique 1 peut avoir différentes orientations par rapport à l'arbre de direction 15. Dans le cas de la figure 1, le verrou électrique 1 est parallèle à l'arbre de direction 15, et pour les figures 2 et 3, le verrou électrique 1 est respectivement en travers et en biais par rapport audit arbre de direction 15.

La figure 4 représente une autre réalisation d'un verrou électrique 2, qui est intégré au corps de colonne 14 en étant orienté suivant l'arbre de direction 15.

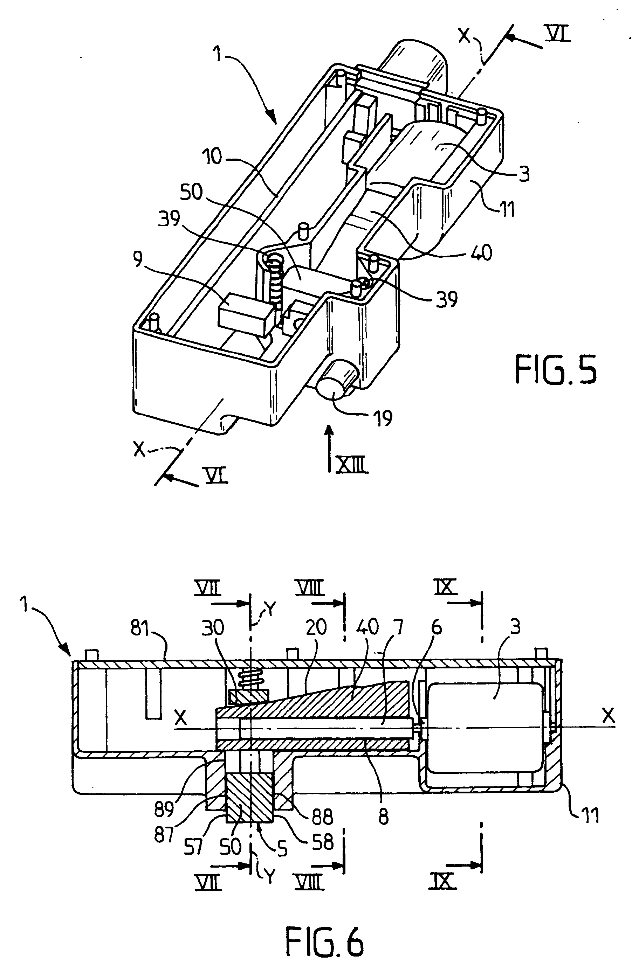

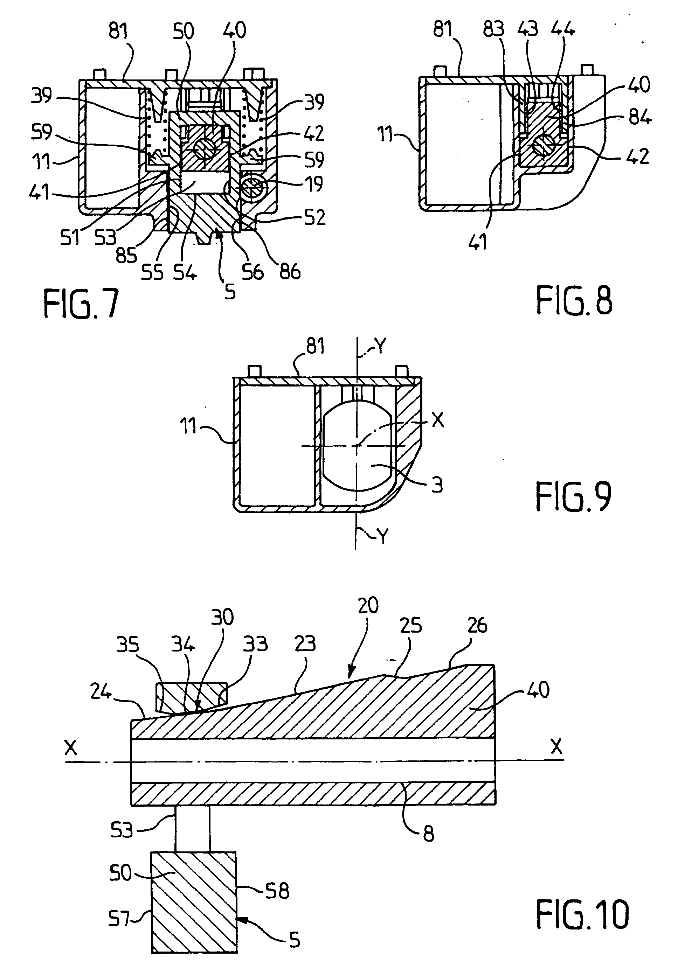

Le verrou électrique 1 est représenté en perspective sur la figure 5, en coupe axiale sur la figure 6 et dans différentes coupes transversales sur les figures 7, 8 et 9.

Le verrou électrique 1 comporte un moteur électrique 3 qui entraîne un ensemble de transmission de mouvement afin d'agir sur un pêne 5. Ledit pêne 5 coopère avec un élément solidaire de l'arbre de direction 15 pour avoir les positions verrouillée et déverrouillée de la colonne de direction. L'élément solidaire de l'arbre de direction 15 n'est pas représenté sur les figures, mais cela peut être un manchon muni d'encoches destinées à recevoir le pêne 5 comme cela est connu. Le pêne 5 a ainsi deux positions :
- une position avec le pêne 5 introduit dans l'élément de l'arbre de direction 15 pour obtenir la position verrouillée de la colonne, et
- une position avec le pêne 5 dégagé de l'élément de l'arbre de direction 15 pour obtenir la position déverrouillée de la colonne.

L'ensemble de transmission de mouvement comprend une vis 7 qui coopère avec un écrou 8. La vis 7 est fixe en translation et l'écrou 8 est fixe en rotation. L'écrou 8 coopère à son tour avec un corps 50 du pêne 5. Le verrou 1 a un corps 11 muni d'une plaque de fermeture 81. Le moteur électrique 3 a une position fixe dans le corps 11, et il a un arbre de sortie 6 qui entraîne en rotation la vis 7. Le moteur électrique 3, la vis 7 et l'écrou 8 ont un même axe, qui est l'axe xx.

Le corps du pêne 50 et le pêne 5 se déplacent suivant un axe yy. Les axes xx et yy forment un plan XY et ils sont perpendiculaires.

L'écrou 8 comporte une face inclinée 20, qui est orientée suivant l'axe xx afin de constituer une cale inclinée 40. Ladite face inclinée 40 se déplace suivant l'axe xx lors de la rotation de la vis 7 dans l'écrou 8. La face inclinée 20 a au moins une pente, qui est déterminée par rapport à un plan de l'axe xx sensiblement perpendiculaire au plan XY.

Le pêne 5 comporte le corps 50 qui est muni d'une face inclinée 30. Ladite face inclinée 30 a au moins une pente, qui est déterminée par rapport au plan de l'axe xx, de manière que ladite face inclinée 30 coopère avec la face inclinée 20 de la cale inclinée 40 pour que le déplacement de la cale inclinée 40 suivant l'axe xx entraîne le déplacement du corps 50 du pêne 5 suivant l'axe yy. Le déplacement axial de la cale inclinée dans les deux sens permet d'avoir la position du pêne 5 sorti et la position du pêne 5 rentré.

Le moteur électrique 3, la vis 7, la cale inclinée 40, le corps 50 du pêne 5 sont agencés pour être alignés suivant l'axe xx du plan XY, de manière à avoir l'encombrement transversal le plus faible possible par rapport audit axe xx. De ce fait il est possible de loger ces différents éléments dans le corps de verrou 11, qui a ainsi un encombrement réduit.

La figure 6 et la figure 10 à grande échelle représentent la réalisation de la face inclinée 20 de la cale inclinée 40 et de la face inclinée 30 du corps 50 du pêne 5.

La face inclinée 20 de la cale inclinée 40 comprend :
- une zone à forte pente 23,
- une zone à faible pente 24, et
- une zone à forte pente 26.

La face inclinée 30 du corps 50 du pêne 5 comprend :
- une zone à forte pente 33, et
   une zone à faible pente 34.

Cet agencement est réalisé afin que les zones à forte pente 23 et 33 coopèrent pour assurer la course d'approche ou du recul du corps 50 donc du pêne 5 ; et que les zones à faible pente 24 et 34 coopèrent pour permettre la course d'engagement ou de désengagement du pêne 5 dans l'élément solidaire de l'arbre de direction 15.

La forte pente est déterminée pour avoir la course d'approche de la cale inclinée 40 donc son encombrement axial le plus faible possible.

La faible pente est déterminée pour avoir la transmission d'effort la plus faible possible du pêne 5 sur la cale inclinée 40 suivant l'axe xx, afin que lors du déverrouillage, le couple demandé au moteur électrique 3 soit le plus faible possible.

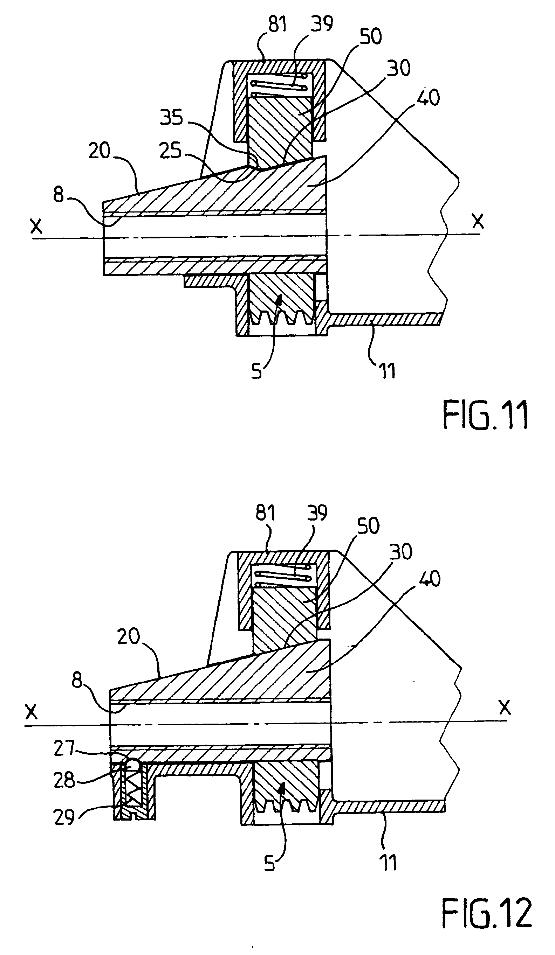

Selon l'invention et pour répondre à la sécurité du maintien de la position déverrouillée, les figures 10, 11 et 12 représentent deux modes de réalisation possibles. Les figures 10 et 11 représentent la cale inclinée 40.

La cale inclinée 40 comporte une contre-pente 25, ladite contre-pente est agencée sur la face inclinée 20. La contre pente 25 coopère avec une contre-pente 35 qui est agencée sur la face inclinée 30 du pêne 5 pour assurer le maintien en position déverrouillée afin de répondre à la sécurité mécanique exigée.

La figure 12 représente la cale inclinée 40 qui comporte une cavité 27 en forme de calotte sphérique. Ladite cavité coopère avec une bille 28 poussée par un ressort 29 logé dans le corps de verrou 11 pour assurer le maintien en position déverrouillée afin de répondre à la sécurité mécanique exigée.

De plus, selon l'invention, le système de la vis 7 et de l'écrou 8, ainsi que le système de la cale inclinée 40 et du corps 50 du pêne 5 sont agencés de manière à ce que lesdits systèmes soient irréversibles afin de garantir la sécurité mécanique exigée.

Le verrou électrique 1 représenté sur les figures 5, 6, 7, 8 et 9 a un corps du pêne 50 qui comporte :
- une ouverture 53 dont le côté supérieur est la face inclinée 30. Ladite ouverture 53 a deux faces latérales 51 et 52 sur lesquelles coulissent deux faces latérales 41 et 42 de la cale inclinée 40. Les faces latérales 41, 42, 51 et 52 sont sensiblement parallèles au plan XY.

Le corps du pêne 50 comporte également deux faces externes 55 et 56 qui coulissent dans deux faces correspondantes 85 et 86 du logement 89 du pêne 5, lesdites faces 85 et 86 étant agencées dans le corps du verrou 11. Les faces externes 55 et 56 et les faces 85 et 86 du logement 89 sont sensiblement parallèles au plan XY.

La cale inclinée 40 est munie de deux faces latérales 43 et 44 qui coulissent, suivant l'axe xx, entre deux glissières 83 et 84 agencées dans le corps de verrou 11. Les deux faces latérales 43 et 44 et les deux glissières 83 et 84 sont sensiblement parallèles au plan XY.

Le verrou électrique 1 comporte deux ressorts de verrouillage et d'engagement 39 prenant appui à l'intérieur du corps de verrou 11 et s'appliquant sur un appui 59 de chacune des faces externes 55 et 56 du corps du pêne 50.

Ainsi la cale inclinée 40 est en liaison glissière dans le corps 11 du verrou 1, et celle-ci est liée au moteur électrique 3 par l'intermédiaire du système vis 7 et écrou 8. Le mouvement de rotation donné par le moteur électrique provoque la translation de la cale inclinée 40 par rapport au corps 11. Du fait que la cale possède une forme inclinée, et que le corps 50 du pêne 5, sous l'action du ressort 39, est en appui sur cette face inclinée 20, la translation de la cale inclinée 40 suivant l'axe xx provoquera la translation du pêne 5 suivant l'axe yy perpendiculaire. La translation du pêne 5 dans une cavité prévue sur la colonne de direction entraîne de blocage de cette dernière.

Deux capteurs 9 sont montés à l'intérieur du corps 11 pour donner la position du verrou 1 correspondant aux positions verrouillée et déverrouillée.

De plus, une unité de commande sous la forme d'une carte électronique de contrôle 10 est montée dans le corps de verrou 11 suivant le sens de l'axe xx.

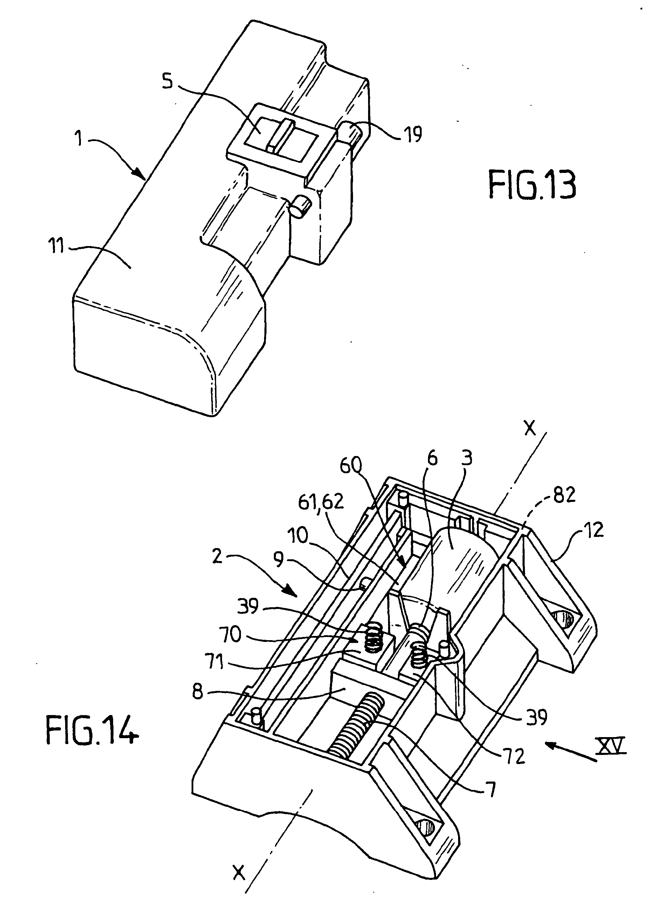

La figure 13 représente la vue d'ensemble extérieure en perspective du verrou électrique 1. Cette vue est dessinée du côté du pêne 5 et représente la fixation sur la colonne de direction.

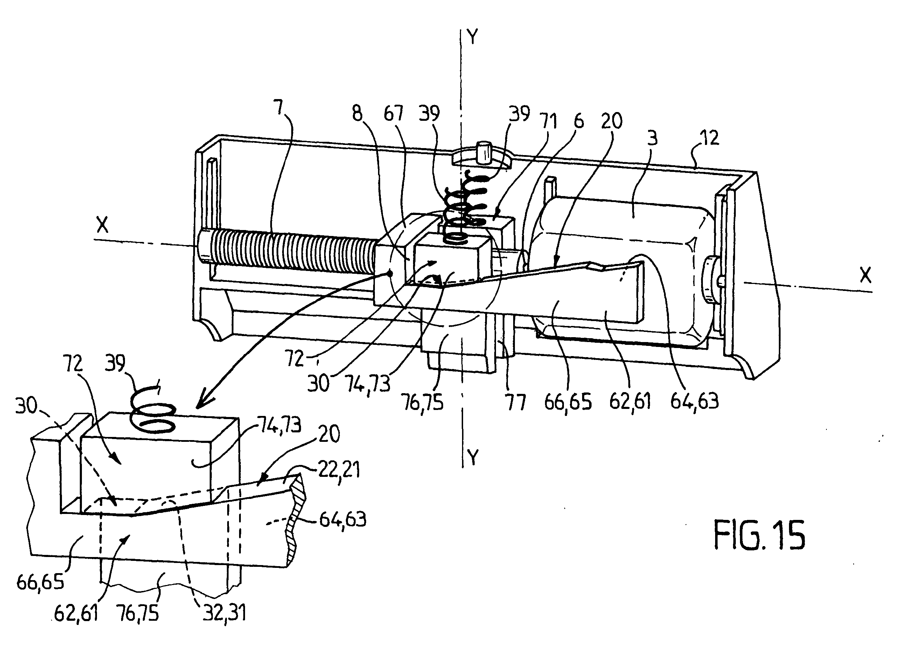

Les figures 14 et 15 représentent un deuxième mode de réalisation de l'invention avec un verrou électrique 2 logé dans un corps 12.

Le verrou électrique 2 a un corps 70 du pêne 5 qui comporte deux portions latérales 71 et 72 qui sont disposées de part et d'autre de la vis 7, et une portion centrale de raccordement 77.

Une cale inclinée 60 comporte deux portions latérales 61 et 62 qui sont agencées à l'extérieur de la portion latérale 71 et 72 correspondante du pêne 5 par rapport à l'axe xx, et une portion centrale de raccordement 67 constituant l'écrou 6. Ladite portion centrale de raccordement 67 est disposée à l'extérieur du pêne 5 par rapport au moteur électrique 3. Chaque portion latérale 71 et 72 du pêne 5 comporte une portion 31 et 32 de la face inclinée 30 qui coopère avec une portion 21 et 22 de la face inclinée 20 de la cale inclinée 60, qui est agencée sur la portion latérale correspondante 61 et 62 de ladite cale inclinée 60.

Un ressort de verrouillage et d'engagement 39 prend appui à l'intérieur du corps de verrou 12 et s'applique sur la portion latérale correspondante 71 et 72 du corps du pêne 70.

Selon le principe de la figure 7, la portion centrale 77 du pêne 5 comporte au moins deux faces externes 55 et 56 qui coulissent dans deux faces correspondantes 85 et 86 du logement du pêne, lesdites faces 85 et 86 étant agencées dans le corps du verrou 12. Les faces externes 55 et 56 et les faces 85 et 86 du logement sont sensiblement parallèles au plan XY.

Chaque portion latérale 61 et 62 de la cale inclinée 60 coulisse d'une part contre une face externe 75 et 76 de la portion latérale 71 et 72 correspondante du pêne 5 et d'autre part contre une paroi du corps de verrou 12.

Le verrou électrique 2 a une cale inclinée 60 qui est divisée en deux portions latérales 61 et 62 qui coopèrent respectivement avec les deux portions latérales 71 et 72 du corps du pêne 70. La face inclinée 20 de la cale inclinée 60 est divisée en deux portions 21 et 22, qui coopèrent respectivement avec les deux portions 31 et 32 de la face inclinée 30 du corps du pêne 70.

L'agencement des faces inclinées 20 et 30 du verrou électrique 1 se retrouve dans le verrou électrique 2 avec les mêmes zones à forte et faible pente.

Il en et de même pour les systèmes de sécurité représentés sur les figures 10, 11 et 12 ainsi que pour les systèmes de la vis 7 et de l'écrou 8, et de la cale inclinée 60 et du corps du pêne 70 qui doivent être irréversibles.

Deux capteurs 9 sont montés à l'intérieur du corps 12 pour donner la position du verrou 2 correspondant aux positions verrouillée et déverrouillée.

De plus, une unité de commande sous la forme d'une carte électronique de contrôle 10 est montée dans le corps de verrou 12 suivant le sens de l'axe xx.

La rotation de l'arbre de direction 15 est bloquée par l'intermédiaire du manchon et du pêne 5 qui est commandé par le mécanisme à cale inclinée 40 ou 60 actionné par le moteur électrique 3. L'ensemble est commandé électriquement.

Les verrous 1 et 2 sont modulaires et permettent de réaliser cette fonction tout en ayant un encombrement très réduit de façon à s'intégrer le plus facilement possible sur une colonne de direction, comme cela est représenté sur les figures 1, 2, 3 et 4.

Dans le cas de la figure 1, le verrou électrique 1 est disposé sur un élément support 16 du corps de colonne 14. Le corps de verrou 11 pénètre et est fixé dans l'élément support 16 par une vis de fixation 19. L'axe xx et la vis de fixation 19 sont sensiblement parallèles à l'arbre de direction 15.

Sur la figure 2, le verrou électrique 1 est disposé sur un élément support 17 du corps de colonne 14. Le corps de verrou 11 pénètre et est fixé dans l'élément support 17 par une vis de fixation 19. L'axe xx et la vis de fixation 19 sont sensiblement dans des plans perpendiculaires à l'arbre de direction 15.

Sur la figure 3, le verrou électrique 1 est disposé sur un élément support 18 du corps de colonne 14. Le corps de verrou 11 pénètre et est fixé dans l'élément support 18 par une vis de fixation 19. L'axe xx et la vis de fixation 19 sont sensiblement parallèles et dans des plans inclinés par rapport à l'arbre de direction 15.

Dans le montage représenté sur la figure 4, le verrou électrique 2 a le corps du verrou 12 qui est intégré au corps de colonne 14. L'axe xx est sensiblement parallèle à l'arbre de direction 15.

## Revendications

1. Verrou (1, 2) à commande électrique de colonne de direction de véhicule automobile comportant un moteur électrique (3), un ensemble de transmission de mouvement qui agit sur un pêne (5), afin de pouvoir coopérer avec un élément solidaire de l'arbre de direction (15) de ladite colonne de direction pour avoir deux positions :
- une position avec le pêne (5) introduit dans l'élément de l'arbre de direction (15) pour obtenir la position verrouillée de la colonne, et
- une position avec le pêne (5) dégagé de l'élément de l'arbre de direction (15) pour obtenir la position déverrouillée de la colonne,
ledit verrou (1, 2) à commande électrique est **caractérisé en ce que** :
- le moteur électrique (3), dont la position est fixe, a un arbre de sortie (6) qui entraîne en rotation une vis (7) coopérant avec un écrou (8) fixe en rotation, le moteur électrique (3), la vis (7) et l'écrou (8) ayant un même axe xx ;
- le pêne (5) se déplace suivant un axe yy ;
- les axes xx et yy forment un plan XY et sont perpendiculaires ; **caracterisé en ce que** :
- l'écrou (8) comporte une face inclinée (20) orientée suivant l'axe xx afin de constituer une cale inclinée (40, 60) qui se déplace suivant l'axe xx, ladite face inclinée (20) ayant au moins une pente, qui est déterminée par rapport à un plan de l'axe xx sensiblement perpendiculaire au plan XY ;
- le pêne (5) comporte un corps (50, 70) avec une face inclinée (30) ayant au moins une pente, qui est déterminée par rapport au plan de l'axe xx, de manière que ladite face inclinée (30) coopère avec la face inclinée (20) de la cale inclinée (40, 60) pour que le déplacement de la cale inclinée (40, 60) suivant l'axe xx entraîne le déplacement du pêne (5) suivant l'axe yy afin d'avoir la position du pêne (5) sorti et la position du pêne (5) rentré ;
- le moteur électrique (3), la vis (7), la cale inclinée (40, 60), le corps (50, 70) du pêne (5) sont agencés pour être alignés suivant l'axe xx, de manière à avoir l'encombrement transversal le plus faible possible par rapport audit axe xx, afin d'être logés dans un corps de verrou (11, 12).

2. Verrou à commande électrique selon la revendication 1, **caractérisé en ce que** les faces inclinées (20, 30) de la cale inclinée (40, 60) et du pêne (5) sont agencées de manière que :
- la face inclinée (20) de la cale inclinée (40, 60) comprend au moins deux zones :
. une zone à forte pente (23, 26) et
. une zone à faible pente (24),
- la face inclinée (30) du pêne (5) comprend au moins deux zones :
. une zone à forte pente (33) et
. une zone à faible pente (34),
- afin que les zones à forte pente (23, 33) coopèrent pour assurer la course d'approche ou du recul du pêne (5) ; et que les zones à faible pente (24, 34) coopèrent pour permettre la course d'engagement ou de désengagement du pêne (5) dans l'élément solidaire de l'arbre de direction (15),
- la forte pente étant déterminée pour avoir la course d'approche de la cale inclinée (40, 60) donc son encombrement axial le plus faible possible,
- la faible pente étant déterminée pour avoir la transmission d'effort la plus faible possible du pêne (5) sur la cale inclinée (40, 60) suivant l'axe xx, afin que lors du déverrouillage, le couple demandé au moteur électrique (3) soit le plus faible possible.

3. Verrou à commande électrique selon la revendication 2, **caractérisé en ce que** la cale inclinée (40, 60) comporte une contre-pente (25) agencée sur la face inclinée (20) qui coopère avec une contre-pente (35) agencée sur la face inclinée (30) du pêne (5) pour assurer le maintien en position déverrouillée afin de répondre à la sécurité mécanique exigée.

4. Verrou à commande électrique selon l'une quelconque des revendications 2 et 3, **caractérisé en ce que** la cale inclinée (40, 60) comporte une cavité (27) en forme de calotte sphérique qui coopère avec une bille (28) poussée par un ressort (29) logé dans le corps de verrou (11, 12), pour assurer le maintien en position déverrouillée afin de répondre à la sécurité mécanique exigée.

5. Verrou à commande électrique selon l'une quelconque des revendications 1 et 2, **caractérisé en ce que** le système vis-écrou (7-8) et le système de la cale inclinée (40, 60) et du pêne (5) sont agencés de manière à ce que lesdits systèmes soient irréversibles afin de garantir la sécurité mécanique exigée.

6. Verrou à commande électrique selon la revendication 1 **caractérisé en ce que** le corps du pêne (50) comporte :
- une ouverture (53) dont le côté supérieur est la face inclinée (30), et avec deux faces latérales (51, 52) sur lesquelles coulissent deux faces latérales (41, 42) de la cale inclinée (40), les faces latérales (41, 42, 51, 52) étant sensiblement parallèles au plan XY ;
- au moins deux faces externes (55, 56) qui coulissent dans deux faces correspondantes du logement du pêne agencées dans le corps du verrou (11), les faces étant sensiblement parallèles au plan XY.

7. Verrou à commande électrique selon la revendication 2, **caractérisé en ce que** la cale inclinée (40) est munie de deux faces latérales (43, 44) qui coulissent, suivant l'axe xx, entre deux glissières (83, 84) agencées dans le corps de verrou (11), les deux faces latérales (43, 44) et les deux glissières (83, 84) étant sensiblement parallèles au plan XY.

8. Verrou à commande électrique selon l'une quelconque des revendications précédentes, **caractérisé en ce qu'**il comporte au moins un ressort de verrouillage et d'engagement (39) prenant appui à l'intérieur du corps de verrou (11) et s'appliquant sur l'un des côtés du corps du pêne (50).

9. Verrou à commande électrique selon la revendication 1, **caractérisé en ce que** :
le corps du pêne (70) comporte :
- deux portions latérales (71, 72) disposées de part et d'autre de la vis (7), et
- une portion centrale de raccordement (77),
la cale inclinée (60) comporte :
- deux portions latérales (61, 62) agencées à l'extérieur de la portion latérale (71, 72) correspondante du pêne (5) par rapport à l'axe xx, et
- une portion centrale de raccordement (67) constituant l'écrou (8) qui est disposée à l'extérieur du pêne (5) par rapport au moteur électrique (3),
de manière que chaque portion latérale (71, 72) du pêne (5) comporte une portion de la face inclinée (31, 32) qui coopère avec une portion de la face inclinée (21, 22) de la cale inclinée (60), qui est agencée sur la portion latérale correspondante (61, 62) de ladite cale inclinée (60).

10. Verrou à commande électrique selon la revendication 9, **caractérisé en ce qu'**il comporte au moins un ressort de verrouillage et d'engagement (39) prenant appui à l'intérieur du corps de verrou (12), le ressort s'appliquant sur la portion latérale correspondante (71, 72) du corps du pêne (70).

11. Verrou à commande électrique selon la revendication 9, **caractérisé en ce que** :
- la portion centrale (77) du pêne (5) comporte au moins deux faces externes (55, 56) qui coulissent dans deux faces correspondantes du logement du pêne agencée dans le corps, les faces (55, 56) étant sensiblement parallèles au plan XY,
- chaque portion latérale (61, 62) de la cale inclinée (60) coulisse d'une part contre la face externe (75, 76) de la portion latérale (71, 72) correspondante du pêne (5) et d'autre part contre une paroi du corps de verrou (12).

12. Verrou à commande électrique selon l'une quelconque des revendications précédentes, **caractérisé en ce que** au moins un capteur (9) est monté à l'intérieur du corps (11, 12) pour donner la position du verrou (1, 2) correspondant aux positions verrouillée et déverrouillée.

13. Verrou à commande électrique selon la revendication 12, **caractérisé en ce qu'**une unité de commande sous la forme d'une carte électronique de contrôle (10) est montée dans le corps de verrou (11, 12) suivant le sens de l'axe xx.

## Patentansprüche

1. Verriegelung (1, 2) zur elektronischen Steuerung der Lenksäule eines Kraftfahrzeugs umfassend einen Elektromotor (3), eine Einheit zur Bewegungsübertragung, die auf einen Riegel (5) einwirkt, um mit einem Element zusammenwirken zu können, das fest mit der Lenkspindel (15) der genannten Lenksäule verbunden ist, zur Einnahme von zwei Positionen:
- eine Position, bei der der Riegel (5) in das Element der Lenkspindel (15) eingeführt ist, um eine verriegelte Position der Lenksäule zu erhalten, und
- eine Position, bei der der Riegel (5) vom Element der Lenkspindel (15) gelöst ist, um eine entriegelte Position der Lenksäule zu erhalten,
wobei die genannte Verriegelung (1, 2) zur elektronischen Steuerung **dadurch gekennzeichnet ist, dass**:
- der Elektromotor (3), dessen Position ortsfest ist, eine Ausgangsspindel (6) aufweist, die eine Schraube (7) in Drehung versetzt, die mit einer drehfesten Mutter (8) zusammenwirkt, wobei der Elektromotor (3), die Schraube (7) und die Mutter (8) eine gleiche Achse xx aufweisen;
- sich der Riegel (5) entlang einer Achse yy bewegt;
- die Achsen xx und yy eine Ebene XY bilden und senkrecht zueinander verlaufen; **dadurch gekennzeichnet, dass**
- die Mutter (8) eine geneigte Fläche (20) aufweist, die entlang der Achse xx ausgerichtet ist, um einen geneigten Keil (40, 60) zu bilden, der sich entlang der Achse xx bewegt, wobei die genannte geneigte Fläche (20) mindestens eine Neigung aufweist, welche in Bezug auf eine Ebene der Achse xx genau senkrecht zur Ebene XY determiniert ist;
- der Keil (5) einen Körper (50, 60) mit einer geneigten Fläche (30) aufweist, welche mindestens eine Neigung aufweist, die in Bezug auf die Ebene der Achse xx derart festgelegt ist, dass die genannte geneigte Fläche (30) mit der geneigten Fläche (20) des geneigten Keils (40, 60) zusammenwirkt, so dass die Bewegung des geneigten Keils (40, 60) entlang der Achse xx die Bewegung des Riegels (5) entlang der Achse yy bewirkt, um eine herausgeschobene Position des Riegels (5) und eine hereingeschobene Position des Riegels (5) zu erzielen;
- der Elektromotor (3), die Schraube (7), der geneigte Keil (40, 60), der Körper (50, 70) des Riegels (5) so angeordnet sind, dass sie entlang der Achse xx ausgerichtet sind, und zwar derart, dass in Bezug auf die genannte Achse xx ein Platzbedarf in seitlicher Richtung entsteht, der so gering wie möglich ist, damit sie in dem Körper einer Verriegelung (11, 12) untergebracht werden können.

2. Verriegelung zur elektronischen Steuerung nach Anspruch 1, **dadurch gekennzeichnet, dass** die geneigten Flächen (20, 30) des geneigten Keils (40, 60) und des Riegels (5) derart angeordnet sind, dass
- die geneigte Fläche (20) des geneigten Keils (40, 60) mindestens zwei Zonen aufweist:
• eine Zone mit starker Neigung (23, 26) und
• eine Zone mit schwacher Neigung (24),
- die geneigte Fläche (30) des Riegels (5) mindestens zwei Zonen aufweist:
• eine Zone mit starker Neigung (33) und
• eine Zone mit schwacher Neigung (34),
- derart, dass die Zonen mit starker Neigung (23, 33) zusammenwirken, um einen Vorschub- oder Rückzugweg des Riegels (5) zu gewährleisten; und dass die Zonen mit schwacher Neigung (24, 34) zusammenwirken, um einen Eingriff oder ein Lösen des Riegels (5) in dem fest mit der Lenkspindel (15) verbundenen Element zu gewährleisten,
- wobei die starke Neigung so festgelegt wird, dass der Vorschubweg des geneigten Keils (40, 60) und somit sein axialer Platzbedarf so gering wie möglich ist,
- wobei die schwache Neigung so festgelegt wird, dass die Kraftübertragung des Riegels (5) auf den geneigten Keil (40, 60) entlang der Achse xx so gering wie möglich ist, damit während der Entriegelung das erforderliche Drehmoment des Elektromotors (3) so gering wie möglich ist.

3. Verriegelung zur elektronischen Steuerung nach Anspruch 2, **dadurch gekennzeichnet, dass** der geneigte Keil (40, 60) eine Gegenneigung (25) aufweist, die an der geneigten Fläche (20) angeordnet ist und die mit einer Gegenneigung (35) zusammenwirkt, die an der geneigten Fläche (30) des Riegels (5) angeordnet ist, um zur Einhaltung der erforderlichen mechanischen Sicherheit die Beibehaltung der entriegelten Position zu gewährleisten.

4. Verriegelung zur elektronischen Steuerung nach einem der Ansprüche 2 und 3, **dadurch gekennzeichnet, dass** der geneigte Keil (40, 60) eine Aussparung (27) in Form einer kugelförmigen Abdeckung umfasst, die mit einer durch eine im Körper der Verriegelung (11, 12) angeordneten Feder (29) angetriebenen Kugel (28) zusammenwirkt, um zur Einhaltung der erforderlichen mechanischen Sicherheit die Beibehaltung der entriegelten Position zu gewährleisten.

5. Verriegelung zur elektronischen Steuerung nach einem der Ansprüche 1 und 2, **dadurch gekennzeichnet, dass** das Schrauben-Mutter-System (7-8) und das System des geneigten Keils (40, 60) und des Riegels (5) derart angeordnet sind, dass die genannten Systeme unumkehrbar sind, um die erforderliche mechanische Sicherheit zu gewährleisten.

6. Verriegelung zur elektronischen Steuerung nach Anspruch 1, **dadurch gekennzeichnet, dass** der Körper des Riegels (5) umfasst:
- eine Öffnung (53), deren obere Seite der geneigten Fläche (30) entspricht und die zwei seitliche Flächen (51, 52) aufweist, auf denen zwei seitliche Flächen (41, 42) des geneigten Keils (40) gleiten, wobei die seitlichen Flächen (41, 42, 51, 52) genau parallel zur Ebene XY verlaufen;
- mindestens zwei äußere Flächen (55, 56), die auf zwei entsprechenden Flächen des Riegelgehäuses gleiten, die im Körper der Verriegelung (11) angeordnet sind, wobei die Flächen genau parallel zur Ebene XY verlaufen.

7. Verriegelung zur elektronischen Steuerung nach Anspruch 2, **dadurch gekennzeichnet, dass** der geneigte Keil (40) zwei seitliche Flächen (43, 44) aufweist, die entlang der Achse xx zwischen zwei Führungsschienen (83, 84) gleiten, die im Körper der Verriegelung (11) angeordnet sind, wobei die beiden seitlichen Flächen (43, 44) und die beiden Führungsschienen (83, 84) genau parallel zur Ebene XY verlaufen.

8. Verriegelung zur elektronischen Steuerung nach einem der vorhergehenden Ansprüche, **dadurch gekennzeichnet, dass** sie mindestens eine Feder zur Verriegelung und zum Eingreifen (39) aufweist, die am Inneren des Köpers der Verriegelung (11) aufliegt und an einer der Seiten des Körpers des Riegels (50) angebracht ist.

9. Verriegelung zur elektronischen Steuerung nach Anspruch 1, **dadurch gekennzeichnet, dass**:
der Körper des Riegels (70) aufweist:
- zwei seitliche Abschnitte (71, 72), die beidseitig der Schraube (7) angeordnet sind, und
- einen zentralen Verbindungsabschnitt (77),
der geneigte Keil (60) aufweist:
- zwei seitliche Abschnitte (61, 62), die in Bezug auf die Achse xx außen am entsprechenden seitlichen Abschnitt (71, 72) des Riegels (5) angeordnet sind, und
- einen zentralen Verbindungsabschnitt (67), der die Mutter (8) bildet, die in Bezug auf den Elektromotor (3) außen am Riegel (5) angeordnet ist,
derart, dass jeder seitliche Abschnitt (71, 72) des Riegels (5) einen Abschnitt der geneigten Fläche (31, 32) aufweist, die mit einem Abschnitt der geneigten Fläche (21, 22) des geneigten Keils (60) zusammenwirkt, der an dem entsprechenden seitlichen Abschnitt (61, 62) des genannten geneigten Keils (60) angeordnet ist.

10. Verriegelung zur elektronischen Steuerung nach Anspruch 9, **dadurch gekennzeichnet, dass** sie mindestens eine Feder zur Verriegelung und zum Eingreifen (39) aufweist, die am Inneren des Köpers der Verriegelung (12) aufliegt und an dem entsprechenden seitlichen Abschnitt (71, 72) des Körpers des Riegels (70) angebracht ist.

11. Verriegelung zur elektronischen Steuerung nach Anspruch 9, **dadurch gekennzeichnet, dass**:
- der zentrale Abschnitt (77) des Riegels (5) mindestens zwei Außenflächen (55, 56) aufweist, die auf zwei entsprechenden Flächen des Riegelgehäuses gleiten, das im Körper angeordnet ist, wobei die Flächen (55, 56) genau parallel zur Ebene XY verlaufen,
- jeder seitliche Abschnitt (61, 62) des geneigten Keils (60) einerseits entlang der Außenfläche (75, 76) des entsprechenden seitlichen Abschnitts (71, 72) des Riegels (5) und andererseits entlang einer Wand des Körpers der Verriegelung (12) gleitet.

12. Verriegelung zur elektronischen Steuerung nach einem der vorhergehenden Ansprüche, **dadurch gekennzeichnet, dass** mindestens ein Sensor (9) im Inneren des Körpers (11, 12) angeordnet ist, um die Position der Verriegelung (1, 2) entsprechend in entriegelter oder verriegelter Position festzustellen.

13. Verriegelung zur elektronischen Steuerung nach Anspruch 12, **dadurch gekennzeichnet, dass** eine Steuerungseinheit in Form einer elektronischen Kontrollkarte (10) im Körper der Verriegelung (11, 12) entlang der Ausrichtung der Achse xx angebracht ist.

## Claims

1. Electrically controlled lock (1, 2) for the steering column of a motor vehicle, comprising an electric motor (3), a motion transmission assembly acting on a bolt (5), in order to be able to cooperate with an element integral with the steering shaft (15) of said steering column so as to take up two positions:
- a position in which the bolt (5) is inserted in the element of the steering shaft (15) in order to obtain the locked position of the column, and
- a position in which the bolt (5) is released from the element of the steering shaft (15) in order to obtain the unlocked position of the column, said electrically controlled lock (1, 2) being **characterised in that**:
- the electric motor (3), the position of which is fixed, has an output shaft (6) which rotationally drives a screw (7) cooperating with a nut (8) connected for rotation therewith, the electric motor (3), the screw (7) and the nut (8) having the same axis xx;
- the bolt (5) moves along an axis yy;
- the axes xx and yy form a plane XY and are perpendicular;
**characterised in that**:
- the nut (8) has an inclined face (20) oriented in the direction of the axis xx in order to constitute an inclined block (40, 60) which moves along the axis xx, said inclined face (20) having at least one gradient which is determined relative to a plane of the axis xx substantially perpendicular to the plane XY;
- the bolt (5) comprises a body (50, 70) having an inclined face (30) with at least one gradient, which is determined relative to the plane of the axis xx, so that the inclined face (30) cooperates with the inclined face (20) of the inclined block (40, 60) so that the movement of the inclined block (40, 60) along the axis xx causes the bolt (5) to move along the axis yy so as to achieve the extended position of the bolt (5) and the retracted position of the bolt (5);
- the electric motor (3), the screw (7), the inclined block (40, 60), the body (50, 70) of the bolt (5) are arranged to be aligned along the axis xx, so as to have the smallest possible transverse dimensions relative to said axis xx, in order to be accommodated in a lock body (11, 12).

2. Electrically controlled lock according to claim 1, **characterised in that** the inclined face (20, 30) of the inclined block (40, 60) and of the bolt (5) are arranged so that:
- the inclined face (20) of the inclined block (40, 60) comprises at least two zones:
• one zone with a steep gradient (23, 26) and
• one zone with a gentle gradient (24),
- the inclined face (30) of the bolt (5) comprises at least two zones:
• one zone with a steep gradient (33) and
• one zone with a gentle gradient (34),
- in order that the zones with a steep gradient (23, 33) cooperate to effect the approaching or withdrawing movement of the bolt (5); and **in that** the zones with a gentle gradient (24, 34) cooperate to allow the movement of engagement or disengagement of the bolt (5) in the element integral with the steering shaft (15),
- the steep gradient being designed to have the approach path for the inclined block (40, 60), i.e. so that its axial dimensions are as small as possible,
- the gentle gradient being designed to have the lowest possible transmission of force of the bolt (5) onto the inclined block (40, 60) along the axis xx, so that during the unlocking movement the torque required of the electric motor (3) is as low as possible.

3. Electrically controlled lock according to claim 2, **characterised in that** the inclined block (40, 60) comprises a mating gradient (25) provided on the inclined face (20), which cooperates with a mating gradient (35) provided on the inclined face (30) of the bolt (5) to ensure that it is held in the unlocked position in order to provide the mechanical safety required.

4. Electrically controlled lock according to either of claims 2 and 3, **characterised in that** the inclined block (40, 60) has a cavity (27) in the form of a spherical cup which cooperates with a ball (28) pushed along by a spring (29) accommodated in the lock body (11, 12), to ensure that it is held in the unlocked position in order to provide the mechanical safety required.

5. Electrically controlled lock according to either of claims 1 and 2, **characterised in that** the screw-nut system (7-8) and the system of the inclined block (40, 60) and bolt (5) are arranged so that the said systems are irreversible in order to provide the mechanical safety required.

6. Electrically controlled lock according to claim 1, **characterised in that** the bolt body (50) comprises:
- an opening (53) the upper side of which is the inclined face (30), and with two side faces (51, 52) over which two side faces (41, 42) of the inclined block (40) slide, the side faces (41, 42, 51, 52) being substantially parallel to the plane XY;
- at least two outer faces (55, 56) which slide in two corresponding faces of the recess for the bolt, which are provided in the lock body (11), the faces being substantially parallel to the plane XY.

7. Electrically controlled bolt according to claim 2, **characterised in that** the inclined block (40) is provided with two side faces (43, 44) which slide, in the direction of the axis xx, between two slides (83, 84) provided in the lock body (11), the two side faces (43, 44) and the two slides (83, 84) being substantially parallel to the plane XY.

8. Electrically controlled lock according to any one of the preceding claims, **characterised in that** it comprises at least one locking and engaging spring (39) bearing on the inside of the lock body (11) and pressing against one of the sides of the body of the bolt (50).

9. Electrically controlled lock according to claim 1, **characterised in that**: the body of the bolt (70) comprises:
- two side portions (71, 72) arranged either side of the screw (7) and
- a central connecting portion (77), the inclined block (60) comprises:
- two side portions (61, 62) arranged outside the corresponding side portion (71, 72) of the bolt (5) relative to the axis xx, and
- a central connecting portion (67) constituting the nut (8) which is disposed outside the bolt (5) relative to the electric motor (3), so that each side portion (71, 72) of the bolt (5) comprises a portion of the inclined face (31, 32) which cooperates with a portion of the inclined face (21, 22) of the inclined block (6), which is provided on the corresponding side portion (61, 62) of said inclined block (60).

10. Electrically operated lock according to claim 9, **characterised in that** it comprises at least one locking and engaging spring (39) bearing on the inside of the lock body (12), the spring pressing against the corresponding side portion (71, 72) of the body of the bolt (70).

11. Electrically controlled lock according to claim 9, **characterised in that**:
- the central portion (77) of the bolt (5) comprises at least two outer faces (55, 56) which slide in two corresponding faces of the recess for the bolt provided in the body, the faces (55, 56) being substantially parallel to the plane XY,
- each side portion (61, 62) of the inclined block (60) sliding on the one hand against the outer surface (75, 76) of the corresponding side portion (71, 72) of the bolt (5) and on the other hand against a wall of the lock body (12).

12. Electrically controlled lock according to any one of the preceding claims, **characterised in that** at least one sensor (9) is mounted inside the body (11, 12) in order to indicate the position of the lock (1, 2) corresponding to the locked and unlocked positions.

13. Electrically controlled lock according to claim 12, **characterised in that** a control unit in the form of an electronic control card (10) is mounted in the lock body (11, 12) in the direction of the axis xx.
